# EUROPÄISCHE PATENTSCHRIFT

(11) **EP 3 380 765 B1**
(45) Veröffentlichungstag und Bekanntmachung des Hinweises auf die Patenterteilung: **15.07.2026**
(21) Anmeldenummer: 16812904.7
(22) Anmeldetag: 25.11.2016
(51) Int. Cl.: F16K 27/00

(54) **ROHRVERTEILERSYSTEM UND FUNKTIONSEINHEIT FÜR EIN ROHRVERTEILERSYSTEM**
PIPE DISTRIBUTION SYSTEM AND FUNCTIONAL UNIT FOR A PIPE DISTRIBUTION SYSTEM
SYSTÈME DE DISTRIBUTION DE TUBES ET UNITÉ FONCTIONNELLE POUR UN SYSTÈME DE DISTRIBUTION DE TUBES

(30) Priorität: 25.11.2015 DE 102015120466
(43) Veröffentlichungstag der Anmeldung: 03.10.2018
(73) Patentinhaber: Straub KG, 73337 Bad Ueberkingen (DE)
(72) Erfinder: STRAUB, Hans Jakob, 73337 Bad Ueberkingen (DE)
(74) Vertreter: Gleim Petri Patent- und Rechtsanwaltspartnerschaft mbB
(86) Internationale Anmeldenummer: PCT/EP2016/001987
(87) Internationale Veröffentlichungsnummer: WO 2017/088976

(56) Entgegenhaltungen:
- EP-A2- 0 199 360
- DE-U1- 202008 003 570
- US-A- 3 334 650
- US-A- 4 696 323

## Beschreibung

Die Erfindung betrifft ein Rohrverteilersystem mit mindestens einem zentralen Hauptrohr und mindestens einer Funktionseinheit nach dem Oberbegriff des Anspruches 1 oder eine Funktionseinheit für ein Rohrverteilersystem nach dem Oberbegriff des Anspruches 10 für die Anwendung in einem Heizungs- oder einem Kühlsystem.

Aus dem Stand der Technik sind verschiedene Rohrverteilersysteme und Funktionseinheiten für den Einsatz in Heizungs- oder Kühlsystemen bekannt. Im Folgenden wird hier der Stand der Technik in zeitlicher Reihenfolge abgehandelt.

Die US 3,334,650 A zeigt einen Drehschieber mit einem ringförmigen Gehäuse, an dem Anschlussstutzen abnehmbar befestigt sind, die zusammen mit dem Gehäuse eine Kammer zur Aufnahme des drehbaren Kükens und zweier die Durchlasskanäle der Anschlussstutzen umgebender ringförmiger Sitzkörper bilden, wobei die Sitzkörper in Ringnuten der Anschlussstutzen liegen und wobei die Innenflächen des Gehäuses und der Anschlussstutzen sowie das Küken mit einem im Wesentlichen inerten Auskleidung Material überzogen sind, dass mit diesen Bauteilen formschlüssig verbunden ist.

Das inerte Auskleidungsmaterial hat hierbei den Zweck, die einzelnen Bauteile gegenüber dem Angriff korrodierender Medien, die von der durch den Drehschieber geregelten Leitung geführt werden, zu schützen.

Zudem sind an diesem Drehschieber die Ringnuten ebenfalls mit inertem Material ausgekleidet, wobei dieses Auskleidungsmaterial zwischen der Anschlußstutzenwand und den aus inertem Material bestehenden Sitzkörpern liegt, so dass die Sitzkörper austauschbar sind.

Hinweise, Anregungen bzw. Lösungen eine Funktionseinheit kostengünstiger herzustellen sind in diesem Dokument nicht offenbart.

Die EP 0 199 360 A2 offenbart einen Kugelhahn in einem mit Kunststoff ausgekleideten Gehäuse. Bei dieser Lösung wird davon ausgegangen, dass bei nicht mehrteilig ausgeführten Gehäusen die Auskleidung und die Dichtungen aus unterschiedlichen Werkstoffen bestehen. Zur Beseitigung dieses Nachteils wird in dieser Offenbarung vorgeschlagen, dass die Kunststoffauskleidung des Gehäuses gleichzeitig die Dichtfunktion gegenüber dem Absperrelement übernimmt.

Hinweise, Anregungen bzw. Lösungen eine Funktionseinheit kostengünstiger herzustellen sind auch in diesem Dokument nicht offenbart; vielmehr ist der Hauptkörper aus einem schweren und teuren Material.

Die US 4,69 6,323 B zeigt ein mit Kunststoff beschichtetes drehbares Ventil. Das Ventil besitzt ein Paar trennbarer Gehäuseteile, die miteinander verbunden sind. Jedes der Gehäuseteile weist eine Kunststoffauskleidung mitsamt einem Dichtungsflansch auf, der angrenzend an die Verbindung angeordnet ist, an der die Gehäusehälften miteinander verbunden sind. Wenn die Gehäuseteile miteinander verbunden sind, bilden sie einen Ventilkörper mit einer Kammer, die zwischen einem Paar von Strömungsleitungen angeordnet ist. Zwischen der Kammer und der Außenseite des Ventils ist ein Schaftdurchgang vorgesehen. Alle Innenflächen des Ventilkörpers, einschließlich der Kammer, der Strömungsleitungen und des Schaftdurchgangs sind kunststoffbeschichtet.

Hinweise, Anregungen bzw. Lösungen eine Funktionseinheit kostengünstiger herzustellen sind auch in diesem Dokument nicht offenbart.

Beispielsweise wird in der Schrift DE 10 2005 006 478 B4 ein Verteilerventil für eine Warmwasserheizungsanlage beschrieben. In einem Hauptrohr für Warmwasser-Zulauf ist eine Vielzahl von quer dazu angeordneten Verteilerventilen angeordnet. Am Ende eines jeden Verteilerventils ist dann ein Heizkreislauf-Vorlauf angeordnet.

Die Verteilerventile sind in der Schrift zweiteilig, ihre (Haupt-) Baugruppen sind einander gegenüberliegend und fluchtend an dem Hauptrohr angebracht. In einem ersten Teil/Baugruppe, in der Regel ein sogenannter Ventileinsatz, ist eine Spindel mitsamt einem federbelasteten Stößel angeordnet, die mit einem Teilabschnitt in das gegenüberliegende zweite Teil/Baugruppe hineinragt. In der Regel ist das zweite Teil/Baugruppe ein Anschlussstutzen, welcher in Fachkreisen auch Anschluss Nippel genannt wird. In diesem Anschlussstutzen ist auch ein Ventilsitz des Ventiles angeordnet, welcher mit einem axial bewegbaren Teil des Ventileinsatzes in funktioneller Wirkverbindung ist; in der Regel ist dies der Schließkörper. Je nach Durchflussmenge des Warmwassers verändert sich die Stellung des in der Spindel geführten Stößels, wodurch sich die Durchflussmenge ablesen lässt.

Der Gewindezapfen des ersten, oberen Teiles/Baugruppe muss die Verbindung zum Hauptrohr herstellen und das Befestigungselement, die Spindel, die Durchflussmesseinrichtung und eine Abschlusskappe halten. Dadurch ist das erste Teil recht voluminös. Weil die Verteilerventile in einem aggressiven Medium zum Einsatz kommen, sind sie häufig aus Edelstahl. Wegen der Komplexität des Bauteiles ist es zusätzlich auch zerspanungstechnisch sehr teuer.

In dem Dokument DE 20 2008 003 570 U1 wird ein Verteilerventil für Warmwasserheizungsanlagen gezeigt, wo das erste, obere Teil und das zweite, untere Teil des Verteilerventils in das Hauptrohr eingeschraubt werden. Das Hauptrohr weist dafür nach innen gewandte Aushalsungen auf, in die ein Gewinde eingerollt wurde. Das Hauptrohr ist im Bereich des Verteilerventils zusätzlich im Wesentlichen quadratisch aufgeweitet, damit mit Hilfe von O-Ringen eine gute Dichtheit zwischen dem Hauptrohr und den Komponenten des Verteilerventils realisiert werden kann. Auch hier kommt dem oberen eingeschraubten Teil wieder die Aufgabe eines Verbindungsstückes zu dem Hauptrohr und zu den anderen, oberen Teilen zu, weshalb es in der Schrift auch den Namen Befestigungselement trägt. Dieses Befestigungselement ist wiederum fertigungstechnisch sehr aufwendig und damit teuer. Falls es zusätzlich aus Edelstahl gefertigt ist, erhöhen sich die Kosten für die Herstellung zusätzlich.

Mit der Schrift DE 10 2011 013 521 A1 wird erstmals der Gedanke der Gewichts- und Fertigungskosten-Reduzierung für Gebäude- und Raumtemperierungssysteme thematisiert. Ein Funktionselement für ein Hubventil wird in Form zweier Schalen aus tiefgezogen Edelstahlblech und mit eingerolltem Gewinde, zu einem Hohlkörper zusammengefügt und dann zusammengepresst und/oder verschweißt.

In der Schrift DE 10 2013 110 982 A1 wird der Weg der Material Einsparung fortgesetzt. Hier sind Abgangsnippel aus Blech bzw. Rohr gefertigt. Zur Gewinnung von Wandstärken im Bereich des Gewindes bzw. des Eurokonus', wird das Rohr umgebördelt, wodurch es zumindest zweilagig wird.

Deshalb ist es Aufgabe der Erfindung, auch andere Bauteile eines Rohrverteilersystems kostengünstiger herzustellen; Nebenaufgabe ist die Schaffung von noch korrosionsbeständigeren Verbindungsstellen zwischen den Funktionseinheiten und dem Hauptrohr.

Die Aufgabe wird erfindungsgemäß durch ein Rohrverteilersystem mit den Merkmalen des Anspruches 1 gelöst.

Oft hat der Fachmann das Problem, dass ein preiswerter bzw. billiger Werkstoff nicht genügend Festigkeit aufweist. Zum einen braucht der Fachmann/Konstrukteur oftmals wegen des aggressiven Mediums Heizungswasser oder wegen eines anderen zur Übertragung von Energie in einem Heizkreis- oder Kühlkreissystem notwendigen aggressiven fluiden Mediums teuren Edelstahl für die Herstellung von Teilen, Baugruppen und Funktionseinheiten für ein Rohrverteilersystem.

Auf der anderen Seite braucht der Fachmann bei derartigen Konstruktionsteilen oft auch nur Volumenmasse ohne besondere Festigkeitsanforderungen, also z.B. den teils preiswerten Werkstoff Kunststoff, z.B. um eine Strömung zu lenken und dann wird wiederum ein Bauteil benötigt, bei dem an bestimmten Stellen eine erhöhte oder gar hohe Festigkeit erforderlich ist und direkt daneben nur Volumenmasse benötigt wird.

Zwar könnte man sich konstruktiv mit zwei separaten Bauteilen helfen, aber dieses würde die Anzahl der Bauteile im Wareneinkauf und/oder in der Fertigung, in der Lagerhaltung und bei der Montage erhöhen und diese Bauteile/Baugruppen müssten wieder über Verschraubungen oder ähnlichen Verbindungen miteinander gekoppelt werden. Diese Methoden erhöhen jedoch die Fertigungskosten.

Ein Weg zur Lösung der anstehenden Problemstellung ist die Verknüpfung/Kombination der Werkstoffe Kunststoff und Metall - vorzugsweise Edelstahl - in einem Bauteil oder einer Baugruppe oder einer Funktionseinheit, die für den Einsatz/Verwendung in einem Rohrverteilersystem vorgesehen sind.

So ist gemäß der Erfindung bei einem Rohrverteilersystem, für das Leiten und Verteilen eines Fluidstroms, mit mindestens einem zentralen Hauptrohr und mindestens einer Funktionseinheit, wobei die Funktionseinheit als Durchflussanzeige, als Durchflussregler, als Ventil, als Thermostat, als Entleerungseinheit, als Anschlussteil oder als Entlüftungseinheit ausgebildet ist, vorgesehen, dass mindestens ein Bauteil bzw. mindestens eine Baugruppe der Funktionseinheit sowohl aus einem Kunststoffteil, als auch aus wenigstens einem Metallteil besteht, wobei das Metallteil und das Kunststoffteil derart fest miteinander verbunden sind, dass sie nicht zerstörungsfrei voneinander getrennt werden können, wobei ein erstes Metallteil an einem Abschnitt eines Kunststoffteils der Funktionseinheit bezüglich der Körperlängsachse des Kunststoffteils positioniert angeordnet ist und ein weiteres, zweites Metallteil das erste Metallteil und den besagten Abschnitt des Kunststoffteils teilweise umgreift derart, dass das erste Metallteil, welches mit dem Hauptrohr verbindbar ist, in axialer Richtung fixiert ist.

Weitere Ausführungsvarianten der Erfindung werden mit den Unteransprüchen offenbart.

Nach einer erarbeiteten Lösung, also einem Aspekt der Erfindung werden aus Kunststoff bestehende Bauteile oder Baugruppen und aus Metall bestehende Bauteile oder Baugruppen über eine Presspassung dauerhaft zusammengefügt.

Nach einer weiteren Ausführungsvariante werden das Bauteil aus Metall und das Bauteil aus Kunststoff miteinander durch eine

Rastung bzw. einer Clipverbindung zusammengebracht, also miteinander verrastet.

Nach einer weiteren Ausführungsvariante werden die besagten Bauteile oder Baugruppen miteinander verklebt.

Weiteren Einzelheiten, Merkmale und Vorteile der Erfindung werden in dem folgenden Beschreibungsteil anhand von schematisch in Figuren gezeigten, jedoch die Erfindung nicht einschränkenden Ausführungsbeispielen näher erläutert. Es zeigen:
- Figur 1: einen Querschnitt durch eine Funktionseinheit in Form eines Ventils mit einer Durchflussanzeige;
- Figur 1a: Details der Darstellung nach Figur 1;
- Figur 2: eine perspektivische und teilweise aufgeschnittene Ansicht des oberen Bereiches des in Fig. 1 gezeigten Ventils;
- Figur 3: eine perspektivische und teilweise aufgeschnittene Ansicht eines weiteren Funktionselementes;
- Figur 3a: eine Schnittzeichnung zu Figur 3.

Zunächst wird vorausgeschickt, dass Begriffe wie "links", "rechts", "oben" oder "unten" sich lediglich auf die Darstellung in den Figuren beziehen, aber von der tatsächlichen Anordnung in der Praxis abweichen können. Weiterhin soll darauf hingewiesen werden, dass die Figuren keine reinen technischen Zeichnungen sind, weshalb teilweise Schraffuren und Abbruchlinien fehlen. Auch können die relativen Dimensionen von der Wirklichkeit abweichen. In der Beschreibung nicht erwähnte Bezugszeichen ergeben sich aus der Bezugszeichenliste. Die Bezugszeichen haben in allen Figuren die gleiche Bedeutung.

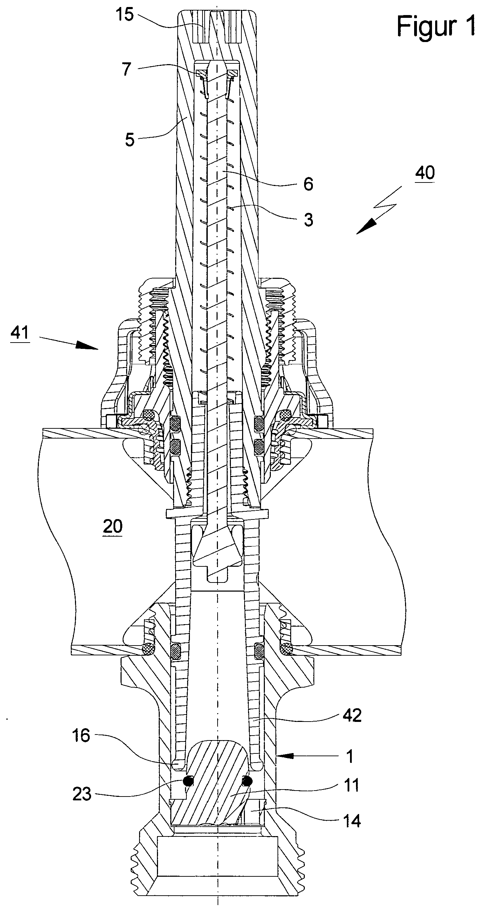

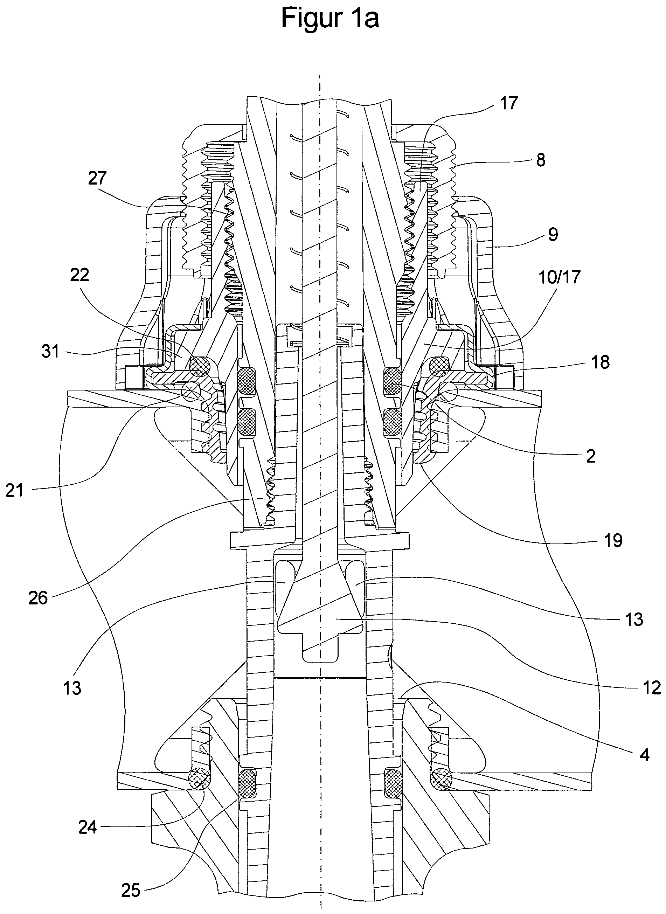

In der Figur 1 ist ein Ventil 40 mit Durchflussanzeige in geschlossener Stellung zu sehen; die Figur 1a zeigt Details der Figur 1. Das Ventil 40 erstreckt sich zu beiden Seiten eines Hauptrohres 20 eines Rohverteilersystems, welches von einem Fluid durchströmt wird.

In den meisten Fällen handelt es sich bei dem Fluid um Heizungswasser. Das Hauptrohr 20 ist an dieser Stelle zu einem im Wesentlichen quadratischen Querschnitt aufgeweitet worden (hier nicht dargestellt), um möglichst ebene Auflageflächen für die Bauteile oder Baugruppen des Ventils 40 oder anderer Funktionseinheiten zu bekommen. O-Ringe 21 und 24 gewährleisten die vollständige Dichtheit an den Verbindungsstellen zwischen den Funktionseinheiten und dem Hauptrohr 20.

Ein Teil/Baugruppe des Ventils 40, genauer gesagt der Ventileinsatz 41 wird von oben her und das andere Teil/Baugruppe des Ventils 40, genauer gesagt der Anschlussstutzen 1 wird von unten her in das Hauptrohr 20 eingeführt und eingeschraubt, bis sie am Hauptrohr 20 fest sitzen.

Die nachfolgend verwendeten Begriffe "oberes Teil" und "unteres Teil" ergeben sich deshalb aus der Richtung von der aus sie eingeschraubt wurden/werden.

Der untere Teil des Ventils 40 besteht im Wesentlichen nur aus einem Anschlussnippel 1 - auch Anschlussstutzen genannt -, an dem in der Regel ein Schlauch oder ein Rohr für einen Warmwasser-Vorlauf angeschlossen wird.

In diesem Anschlussnippel 1 ist der ortsfest positionierte Ventilsitz 11 des Ventiles 40 angeordnet, welcher in seinem unteren Bereich mehrere Ausströmöffnungen 14 aufweist. Hier ist wegen der Schnittzeichnung und einer Anordnung selbiger 14 in einer 120°-Teilung nur eine Ausströmöffnung zu sehen. Auf diesen Ventilsitz 11 wird später noch nochmals eingegangen.

Das dargestellte Ventil 40 und seine Funktion wird nachfolgend von innen nach außen beschrieben. Ein Schauglas 5, welches vorteilhaft aus einem transparenten Kunststoff besteht und außen eine Skala besitzt, ist mit seinem inneren Endabschnitt über ein Gewinde 26 mit dem unteren Spindelteil des Ventiles 40 fest verbunden. Mit seinem freien Endabschnitt ist das untere Spindelteil zugleich der Schließkörper 42 des Ventiles 40. Die Innenbohrung des unteren Spindelteils ist zu diesem Zweck ein sich öffnender Innenkonus. Vorzugsweise ist der unmittelbar an die Stirnfläche anschließende Körperabschnitt des unteren Spindelteils in Form einer nach Außen zeigenden Wulst 16 ausgebildet.

In dem Schauglas 5 ist ein Stößel 6 geführt. Er wird mittels einer konzentrisch um den Stößel 6 angeordneten Druckfeder 3 in seine obere Stellung gedrückt. Das obere Federende stützt sich auf einem - an dem Stößel 6 angebrachten - Anzeigeteller 7 ab, wobei der rote Anzeigeteller 7 durch den transparenten Kunststoff des Schauglases 5 hindurch gut ablesbar ist, wodurch die aktuelle Stellung des Stößels 6 gut erkennbar ist.

Die aus dem Schauglas 5, dem unteren Spindelteil, dem Stößel 6 und der Druckfeder 3 bestehende Baugruppe des Ventiles 40 ist mittels einem Gewinde 27 in einer Gehäusebaugruppe 10 des Ventiles 40 eingeschraubt, wird dort gehalten und bei einer axialen Bewegung geführt. Dieser Baugruppe ist in der Gehäusebaugruppe 10 kein axialer Anschlag zugeordnet. Gegenüber der Gehäusebaugruppe 10 ist diese Baugruppe des Ventiles 40 mit O-Ringen 2 abgedichtet.

In dem in der Figur 1 gezeigten Ausführungsbeispiel wurde diese Baugruppe soweit eingeschraubt, dass die Wulst 16 den Spalt zwischen dem Innendurchmesser des Anschlussnippels 1 und dem im Wesentlichen ballonförmigen Ventilsitz 11 abdichtet.

So weit ist die Funktionseinheit "Ventil mit Durchflussanzeige" schon einsatzbereit. Wird nämlich an einem Durchflusseinstellkopf 15 der Baugruppe "Schauglas-unteres Spindelteil-Stößel-Feder" gedreht, so öffnet sich der Spalt zwischen der Wulst 16 und dem Ventilsitz 11 und das in dem Hauptrohr 20 geführte fluide Medium strömt durch Einströmöffnungen 13 des unteren Spindelteils in dessen Innenkonus hinein. Wegen der Strömungsreibung um einen im Innenkonus positionierten Schleppkonus 12 des Stößels 6 herum, wird der Stößel 6 in dem sich konisch erweiternden Kanal - dem Innenkonus - bis zu der Position mitgeschleppt, wo die Strömungskräfte und die Federkräfte der Druckfeder 3 im Gleichgewicht sind.

Eine Veränderung der Einschraubtiefe der Baugruppe "Schauglas-unteres Spindelteil-Stößel-Feder" in der Gehäusebaugruppe 10, verändert die Durchflussmenge.

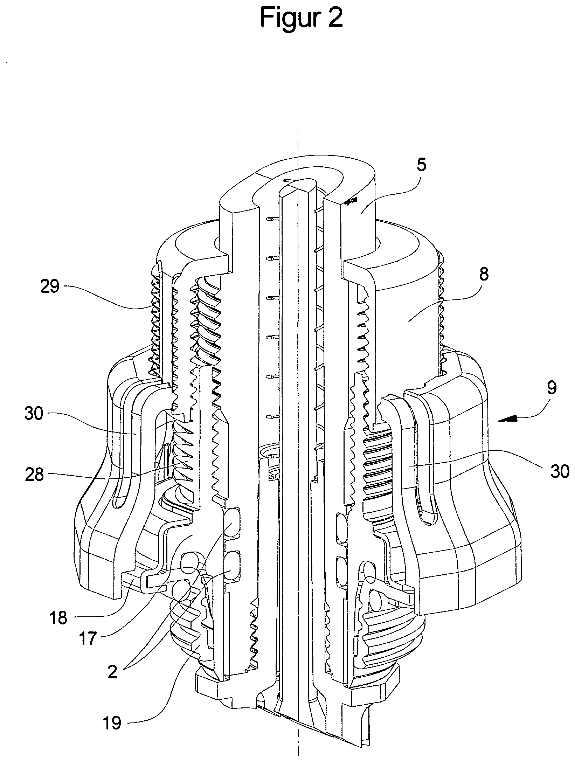

Eine Einstellmutter 8, siehe Fig. 1a und 2, liegt mit ihrer Schulter und an einer Stufe des Schauglases 5 an, wodurch ein axialer Anschlag für die Baugruppe "Schauglas-unteres Spindelteil-Stößel-Feder" gegeben ist, wodurch eine einmal eingestellte Durchflussmenge auch nach einem zwischenzeitlichen Verschließen des Ventils 40 wieder genau eingestellt werden kann, also die Baugruppe "Schauglas-unteres Spindelteil-Stößel-Feder" in ihre zuvor eingenommene Ausgangsposition zurück geführt werden kann. Diese Funktion nennt der Fachmann auch Memory-Funktion.

Mit einer Arretierungskappe 9 wird die Stellung der Einstellmutter 8 gesichert. Auf Details hierzu wird noch im Beschreibungsteil zu der Figur 2 eingegangen.

Das Wesentliche, der Kern der Erfindung ist aber in der Gehäusebaugruppe 10 zu finden: Ein im Wesentlichen im Querschnitt L-förmiges Metallteil 19 - zur verbalen Kennzeichnung auch erstes Metallteil oder metallische Außenhaut genannt - ist an seinem langen Schenkel mit Gewinde versehen und dient zur Herstellung der Schraubverbindung zwischen dem Ventileinsatz 41 und dem Hauptrohr 20.

Ein Kunststoffteil 17 (auch Führungshülse oder Grundkörper des Ventileinsatzes genannt) führt das Schauglas 5. Ein weiteres Metallteil 18, das zweite Metallteil, klammert die Teile 17 und 19 zusammen, wobei die beiden Metallteile 19 und 18 einen im Wesentlichen im mittleren Bereich der Führungshülse 17 angeordneten und radial körperauswärts gerichteten Bund 31 umgreifen und somit das Einschraubteil des Ventileinsatzes 41 formschlüssig und fest an selbigem 41 angeordnet ist.

Um eine Dichtigkeit zwischen den Teilen 17 und 19 zu gewährleisten, ist zwischen beiden Teilen noch ein O-Ring 22 angeordnet. Diese Gestaltung der Gehäusebaugruppe 10 ist sehr vorteilhaft, weil sie immer nur den Werkstoff verwendet, der an einem spezifischen Ort in und an diesem Gehäuse gebraucht wird und dabei trotzdem nur ein einstückiges Bauteil ist.

In der Figur 2 ist der Mechanismus der Memory-Funktion etwas besser zu sehen. Weil in der Figur 1 das Kunststoffteil 17, also die Führungshülse der Gehäusebaugruppe 10 ungünstig geschnitten ist, kann man dort in der Fig.1 das Gewinde 28 im oberen, äußeren Abschnitt der Führungshülse 17 nicht sehen, unter anderem auch, weil das Gewinde 28 nur in Sektoren der Außenfläche der Führungshülse 17 angeordnet ist. Es ist quasi ein Bajonett-Gewinde. Die Arretierkappe 9 besitzt einige elastische Krallen 30, wodurch sie ebenfalls in einem weiteren Bajonett-Gewinde 29 durch axiale und rotatorische Bewegungen greifen kann.

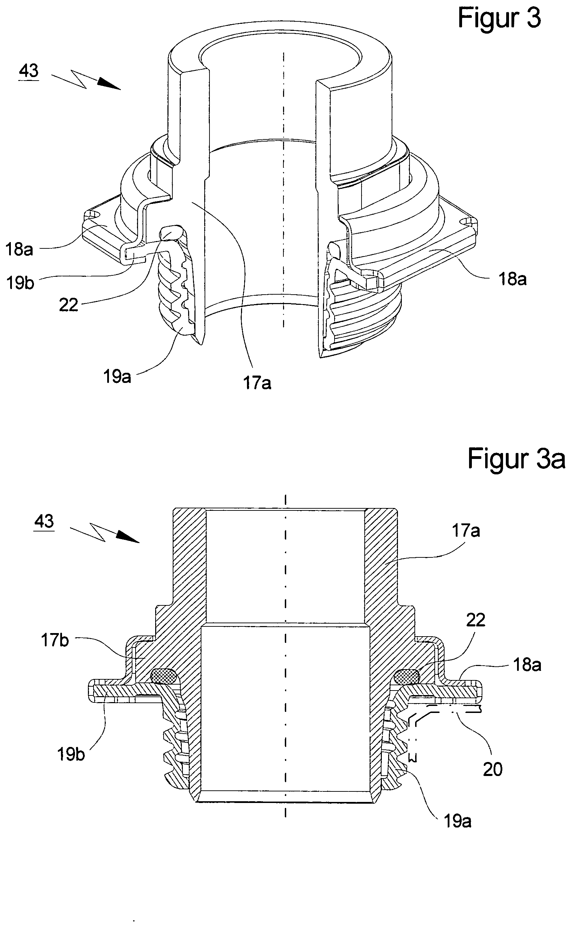

In den Figuren 3 und 3a wird ein weiteres Ausführungsbeispiel der Erfindung gezeigt, ein anderes, weiteres Funktionselement 43, welches nicht als Ventil mit Durchflussanzeige (siehe Figur 1) genutzt wird.

Man kann aber deutlich den gleichen erfindungsgemäßen Aufbau wie bei dem Ventil 40 und dessen Ventileinsatz 41 gemäß den Figuren 1, 1a und 2 sehen:
Der von seinem Volumen her größere Körper ist aus einem kostengünstigen Kunststoff 17a; sein Außengewinde besteht aus einem hochwertigen und festen Material, hier einem Metallteil 19a. Vorteilhaft ist dieses erste Metallteil ein hülsenförmiger Körper 19a mit einem radial körperauswärts gerichteten Bund 19b, er ist somit im Querschnitt L-förmig.

Der hülsenförmige Abschnitt des Metallteiles 19a ist auf einen Außenzylinder des Hauptteiles 17a des Funktionselementes 43 aufgeschoben und liegt mit seinem Bund 19b an einem Bund 17b des Hauptteiles 17a an.

Das zweite Metallteil 18a bildet eine "Klammer", welche einerseits am Bund 19b und andererseits an dem Bund 17b derart anliegt, dass der Bund 19b stets an dem Bund 17b formschlüssig anliegt und somit das erste Metallteil 19a stets axial gesichert auf dem Hauptteil 17a angeordnet ist.

Es soll der Vollständigkeit halber noch erwähnt werden, dass Gemäß der erfinderischen Grundidee die Bauteile 18 und 19 bzw. die Bauteile 18a und 19a jeweils auch ein einziges Ausgangsbauteil sein können.

Die vorliegende Erfindung ist hier nur beispielhaft an einem Ventil mit Durchflussanzeige und einem Verbindungstutzen gezeigt worden. Die Erfindung kann auch bei anderen Funktionseinheiten wie Durchflussreglern, Ventilen, Thermostaten, Entleerungseinheiten, Entlüftungseinheiten und Ähnlichem angewendet werden.

### Bezugszeichenliste

- 1: Anschlussnippel
- 2: O-Ringe am Schauglas
- 3: Druckfeder
- 4: Konusteil (Innenkonus; sogenannte Regelstrecke)
- 5: Schauglas
- 6: Stößel
- 7: Anzeigeteller
- 8: Einstellmutter
- 9: Arretierungskappe
- 10: Gehäusebaugruppe
- 11: Ventilsitz
- 12: Schleppkonus (Anströmteil an Pos. 6)
- 13: Einströmöffnungen
- 14: Ausströmöffnungen
- 15: Durchflusseinstellkopf
- 16: Wulst
- 17: Kunststoffteil der Gehäusebaugruppe (Führungshülse, Grundkörper)
- 17a: Kunststoffteil (Hauptteil von Pos. 43)
- 17b: Bund (an Pos. 17a)
- 18: Metallteil der Gehäusebaugruppe (zweites Metallteil; Klammer)
- 18a: Metallteil (für Pos. 43; Klammer)
- 19: Metallteil der Gehäusebaugruppe (erstes Metallteil)
- 19a: Metallteil (an Pos. 43)
- 19b: Bund (an Pos. 19a)
- 20: Hauptrohr
- 21: O-Ring zwischen Gehäuse und Hauptrohr
- 22: O-Ring im Gehäuse
- 23: O-Ring am Ventilsitz
- 24: O-Ring zwischen Anschlussnippel und Hauptrohr
- 25: O-Ring am Konusteil
- 26: Gewinde (Befestigungsgewinde)
- 27: Gewinde (Bewegungsgewinde)
- 28: sektorartiges Außengewinde an Kunststoffteil 17/10
- 29: Bajonett-Gewinde an der Einstellmutter 8 (außen)
- 30: Krallen der Arretierkappe 9
- 31: Bund (an Pos. 17)
- 40: Ventil
- 41: Ventileinsatz
- 42: Schließkörper
- 43: Funktionselement (weiteres Funktionselement, Anschlussstutzen)

## Patentansprüche

1. Rohrverteilersystem, für das Leiten und Verteilen eines Fluidstroms, mit mindestens einem zentralen Hauptrohr (20) und mindestens einer Funktionseinheit (40; 43), wobei die Funktionseinheit (40; 43) als Durchflussanzeige, als Durchflussregler, als Ventil, als Thermostat, als Entleerungseinheit, als Anschlussteil oder als Entlüftungseinheit ausgebildet ist, wobei
mindestens ein Bauteil bzw. mindestens eine Baugruppe der Funktionseinheit (40; 43) sowohl aus einem Kunststoffteil, als auch aus wenigstens einem Metallteil besteht, wobei das Metallteil und das Kunststoffteil derart fest miteinander verbunden sind, dass sie nicht zerstörungsfrei voneinander getrennt werden können,
wobei
ein erstes Metallteil (19; 19a) an einem Abschnitt eines Kunststoffteils (17; 17a) der Funktionseinheit (40; 43) bezüglich der Körperlängsachse des Kunststoffteils (17; 17a) positioniert angeordnet ist und **dadurch gekennzeichnet, dass**
ein weiteres, zweite Metallteil (18; 18a) das erste Metallteil (19; 19a) und den besagten Abschnitt des Kunststoffteils (17; 17a) teilweise umgreift derart, dass das erste Metallteil (19; 19a) in axialer Richtung fixiert ist,
und wobei
die Funktionseinheit (40; 43) mit ihrem ersten Metallteil (19, 19a) über ein in dem Metallteil (19, 19a) eingeprägtes Gewinde mit dem Hauptrohr (20) verbindbar ist.

2. Rohrverteilersystem nach Anspruch 1,
**dadurch gekennzeichnet, dass**
das erste und das zweite Metallteil (19; 19a; 18; 18a) aus rostfreiem Edelstahl besteht.

3. Rohrverteilersystem nach Anspruch 1 oder 2,
**dadurch gekennzeichnet, dass**
das Kunststoffteil (17; 17a) und das Metallteil (19; 19a; 18; 18a) spritztechnisch miteinander verbunden sind, oder
das Kunststoffteil (17; 17a) und das Metallteil (19; 19a; 18; 18a) über eine Presspassung miteinander verbunden sind, oder
das Kunststoffteil (17; 17a) und das Metallteil (19; 19a; 18; 18a) miteinander verrastet oder/und miteinander verklebt sind.

4. Rohrverteilersystem nach mindestens einem der Ansprüche 1 bis 3,
**dadurch gekennzeichnet, dass**
das Kunststoffteil (17) und das Metallteil (18, 19) konzentrisch zueinander angeordnet sind.

5. Rohrverteilersystem nach mindestens einem der Ansprüche 1 bis 4,
**dadurch gekennzeichnet, dass**
das Kunststoffteil (17; 17a) der Grundkörper oder der Grundkörper und zugleich die Führungshülse oder die Führungshülse oder das Hauptteil der Funktionseinheit (40; 43) ist.

## Claims

1. A pipe distribution system for conveying and distributing a fluid flow, comprising at least one central main pipe (20) and at least one functional unit (40; 43), wherein the functional unit (40; 43) is configured as a flow indicator, a flow regulator, a valve, a thermostat, a drain unit, a connector, or a venting unit,
wherein
at least one component or at least one assembly of the functional unit (40; 43) consists of both a plastic part and at least one metal part, wherein the metal part and the plastic part are firmly joined together in such a way that they cannot be separated from one another without being destroyed,
wherein
a first metal part (19; 19a) is positioned on a section of a plastic part (17; 17a) of the functional unit (40; 43) relative to the longitudinal axis of the plastic part (17; 17a) and **characterized in that**
a further, second metal part (18; 18a) partially surrounds the first metal part (19; 19a) and the aforementioned section of the plastic part (17; 17a) in such a way that the first metal part (19; 19a) is fixed in the axial direction,
and wherein
the functional unit (40; 43) can be connected to the main pipe (20) via its first metal part (19, 19a) using a thread formed in the metal part (19, 19a).

2. The pipe distribution system according to claim 1,
**characterized in that**
the first and second metal parts (19; 19a; 18; 18a) are made of stainless steel.

3. The pipe distribution system according to claim 1 or 2,
**characterized in that**
the plastic part (17; 17a) and the metal part (19; 19a; 18; 18a) are connected to each other by injection molding, or
the plastic part (17; 17a) and the metal part (19; 19a; 18; 18a) are connected to each other by a press fit, or
the plastic part (17; 17a) and the metal part (19; 19a; 18; 18a) are interlocked or/and bonded together.

4. The pipe distribution system according to at least one of claims 1 to 3,
**characterized in that**
the plastic part (17) and the metal part (18, 19) are arranged concentrically with respect to one another.

5. The pipe distribution system according to at least one of claims 1 to 4,
**characterized in that**
the plastic part (17; 17a) is the base body, or the base body and, at the same time, the guide sleeve, or the guide sleeve, or the main part of the functional unit (40; 43).

## Revendications

1. Système de distribution de tubes, destiné à acheminer et à distribuer un flux de fluide, comprenant au moins un tube principal central (20) et au moins une unité fonctionnelle (40 ; 43), l'unité fonctionnelle (40 ; 43) étant conçue comme un indicateur de débit, un régulateur de débit, une vanne, un thermostat, une unité de vidange, un raccord ou une unité de purge,
dans lequel
au moins un composant ou au moins un sous-ensemble de l'unité fonctionnelle (40 ; 43) est constitué à la fois d'une pièce en plastique et d'au moins une pièce métallique, la pièce métallique et la pièce en plastique étant assemblées de manière si solide qu'il est impossible de les séparer sans les endommager,
dans lequel
une première pièce métallique (19 ; 19a) est disposée sur une partie d'une pièce en plastique (17 ; 17a) de l'unité fonctionnelle (40 ; 43), en étant positionnée par rapport à l'axe longitudinal de la pièce en plastique (17 ; 17a)
et **caractérisé en ce que**
une autre, deuxième pièce métallique (18 ; 18a) entoure partiellement la première pièce métallique (19 ; 19a) et ladite partie de la pièce en plastique (17 ; 17a) de telle sorte que la première pièce métallique (19 ; 19a) soit fixée dans le sens axial,
et dans lequel
l'unité fonctionnelle (40 ; 43) peut être reliée au tube principal (20) par l'intermédiaire de sa première pièce métallique (19, 19a) grâce à un filetage taraudé dans ladite pièce métallique (19, 19a).

2. Système de distribution de tubes selon la revendication 1,
**caractérisé en ce que**
les première et deuxième pièces métalliques (19 ; 19a ; 18 ; 18a) sont en acier inoxydable.

3. Système de distribution de tubes selon la revendication 1 ou 2,
**caractérisé en ce que**
la pièce en plastique (17 ; 17a) et la pièce métallique (19 ; 19a ; 18 ; 18a) sont assemblées par moulage par injection, ou
la pièce en plastique (17 ; 17a) et la pièce métallique (19 ; 19a ; 18 ; 18a) sont assemblées par ajustement serré, ou
la pièce en plastique (17 ; 17a) et la pièce métallique (19 ; 19a ; 18 ; 18a) sont emboîtées l'une dans l'autre ou/et collées l'une à l'autre.

4. Système de distribution de tubes selon au moins l'une des revendications 1 à 3,
**caractérisé en ce que**
la pièce en plastique (17) et la pièce métallique (18, 19) sont disposées de manière concentrique l'une par rapport à l'autre.

5. Système de distribution de tubes selon au moins l'une des revendications 1 à 4,
**caractérisé en ce que**
la pièce en plastique (17 ; 17a) constitue soit le corps de base, soit le corps de base et, en même temps, la douille de guidage, soit la douille de guidage, soit la partie principale de l'unité fonctionnelle (40 ; 43).
